# EUROPÄISCHE PATENTSCHRIFT

(11) **EP 2 325 029 B1**
(45) Veröffentlichungstag und Bekanntmachung des Hinweises auf die Patenterteilung: **09.07.2014**
(21) Anmeldenummer: 10190414.2
(22) Anmeldetag: 09.11.2010
(51) Int. Cl.: B60D 1/54, F16C 11/10, F16C 11/06

(54) **Kugelschwenkmodul**
Spherical swivel module
Module de basculement de sphère

(30) Priorität: 20.11.2009 DE 102009046931
(43) Veröffentlichungstag der Anmeldung: 25.05.2011
(73) Patentinhaber: ZF Friedrichshafen AG, 88038 Friedrichshafen (DE)
(72) Erfinder: Bröker, Klaus, 49163, Bohmte (DE); Nordloh, Alfons, 49429, Visbek (DE)

(56) Entgegenhaltungen:
- EP-A1- 2 017 097
- EP-A1- 2 042 353
- WO-A1-2009/143934
- DE-U1-202005 014 499

## Beschreibung

Die Erfindung betrifft ein Kugelschwenkmodul, wie es beispielsweise in der EP 2017097 A1 gezeigt ist, mit einem Gehäuse, einem eine Gelenkkugel umfassenden, mittels dieser bewegbar in dem Gehäuse gelagerten und sich aus diesem heraus erstreckenden Kugelzapfen, in dem eine sich in einer Längsrichtung erstreckende Zapfenausnehmung vorgesehen ist, einem in der Zapfenausnehmung einliegenden und in Längsrichtung verschiebbar geführten Sperrbolzen, wenigstens einem in einer Gehäuseausnehmung sitzenden und eine Arretierungsausnehmung aufweisenden Druckstück, und wenigstens einem in der Gelenkkugel vorgesehenen, in die Zapfenausnehmung einmündenden, zum Gehäuse hin offenen und in einer schräg oder quer zur Längsrichtung ausgerichteten Führungsrichtung verlaufenden Führungskanal, in dem wenigstens ein in der Führungsrichtung verschiebbar geführtes Führungselement einliegt, welches in einer Betriebsstellung des Kugelzapfens durch Verschieben des Sperrbolzens in die Arretierungsausnehmung einrückbar ist.

Ein derartiges Kugelschwenkmodul wird z.B. zum schwenkbaren Lagern einer Kugelstange an einem Zugfahrzeug eingesetzt, die insbesondere zwei um vorzugsweise 180° verdrehte Endstellungen annehmen kann. Aus diesen Endstellungen heraus, von denen eine eine Betriebsstellung und eine andere eine Ruhestellung bildet, soll das Schwenkmodul ein Schwenken der Kugelstange relativ zu dem Zugfahrzeug gewährleisten. Die Kugelstange und das Schwenkmodul sind Teil einer Anhängevorrichtung, sodass in der Betriebsstellung ein Anhängerfahrzeug an die Kugelstange angekuppelt werden kann, wohingegen in der Ruhestellung die Kugelstange unter das Zugfahrzeug geschwenkt ist. Zum Verriegeln des Kugelzapfens in der Betriebsstellung ist ein vorzugsweise gehärtetes Druckstück vorgesehen, welches an einer geeigneten Stelle in das Gehäuse eingepresst ist. Zum Verriegeln des Kugelzapfens in der Ruhestellung sind hingegen in das Gehäuse eingefräste Taschen an geeigneten Stellen vorgesehen. Die Verriegelung des Kugelzapfens in der Betriebsstellung ist als sicherheitskritisch einzustufen, wobei die betriebssichere Verriegelung von einer Toleranzkette abhängt, die bislang nur durch eine kostenintensive Fertigung mit ausreichender Genauigkeit realisierbar ist. Die Verriegelung des Kugelzapfens in der Ruhestellung ist hingegen nicht sicherheitsrelevant und auch nicht so toleranzkritisch, insbesondere da es in der Ruhestellung zulässig ist, den Sperrbolzen bis zum Endradius bzw. Auslauf der Verriegelungsschräge oder Arbeitsfläche zu verschieben.

Ausgehend hiervon liegt der Erfindung die Aufgabe zugrunde, ein Kugelschwenkmodul der eingangs genannten Art derart weiterzubilden, dass eine sichere Verriegelung des Kugelzapfens in der Betriebsstellung möglichst kostengünstig realisierbar ist.

Diese Aufgabe wird erfindungsgemäß mit einem Kugelschwenkmodul nach Anspruch 1 gelöst. Bevorzugte Weiterbildungen der Erfindung sind in den Unteransprüchen gegeben.

Das erfindungsgemäße Kugelschwenkmodul weist ein Gehäuse, einen eine Gelenkkugel umfassenden, mittels der Gelenkkugel bewegbar in dem Gehäuse gelagerten und sich aus dem Gehäuse heraus erstreckenden Kugelzapfen, in dem eine sich in einer Längsrichtung erstreckende Zapfenausnehmung vorgesehen ist, einen in der Zapfenausnehmung einliegenden und in Längsrichtung verschiebbar geführten Sperrbolzen, wenigstens ein in einer Gehäuseausnehmung sitzendes und eine Arretierungsausnehmung aufweisendes Druckstück, und wenigstens einen in der Gelenkkugel vorgesehenen, in die Zapfenausnehmung einmündenden, zum Gehäuse hin offenen und in einer schräg oder quer zur Längsrichtung ausgerichteten Führungsrichtung verlaufenden Führungskanal auf, in dem wenigstens ein in der Führungsrichtung verschiebbar geführtes Führungselement einliegt, welches in einer Betriebsstellung des Kugelzapfens durch Verschieben des Sperrbolzens in die Arretierungsausnehmung einrückbar ist, wobei das Druckstück in die als Durchgangsloch ausgebildete Gehäuseausnehmung, insbesondere von außen, eingeschraubt ist.

Durch die erfindungsgemäße Weiterbildung des Kugelschwenkmoduls ist es möglich, das Druckstück von außen in die Gehäuseausnehmung einzuschrauben, sodass ein Einpressen des Druckstücks in die Gehäuseausnehmung vom Gehäuseinnenraum her entfallen kann. Zum einen sind dadurch das Gehäuse einfacher herstellbar und das Druckstück einfacher montierbar, zum anderen lässt sich das Druckstück genauer positionieren. Ein Einhalten der geforderten Toleranzkette ist somit relativ einfach möglich. Im Gegensatz dazu ist dieses bei einem eingepressten Druckstück nicht mehr zu beeinflussen.

Das Durchgangsloch erstreckt sich bevorzugt durch eine Wandung des Gehäuses hindurch. Die Wandung begrenzt insbesondere einen Gehäuseinnenraum, in welchem der Kugelzapfen mit seiner Gelenkkugel sitzt. Die Gehäuseausnehmung weist sowohl zum Gehäuseinnenraum als auch nach außen eine Öffnung auf. Bevorzugt ist die Gehäuseausnehmung zylindrisch ausgebildet, insbesondere durchgängig zylindrisch.

Gemäß einer Ausgestaltung der Erfindung weist das Druckstück ein Außengewinde auf, welches mit einem Innengewinde der Gehäuseausnehmung im Eingriff steht. Insbesondere ist das Druckstück mit einer Gewindesicherung gegen ein Lösen der Schraubverbindung zwischen dem Druckstück und dem Gehäuse gesichert, wobei die Gewindesicherung das Druckstück vorzugsweise in der Gehäuseausnehmung fixiert oder verriegelt. Gemäß einer Ausgestaltung der Erfindung wird ein Sicherungslack oder Klebstoff als Gewindesicherung eingesetzt, sodass das Druckstück in der Gehäuseausnehmung festgelegt ist. Als Klebstoff kann z.B. ein flüssiger Klebstoff oder ein Zweikomponenten-Klebstoff eingesetzt werden. Bevorzugt ist eine Dichtung vorgesehen, mittels welcher das Druckstück gegenüber dem Gehäuse abdichtbar ist. Die Dichtung kann von der Gewindesicherung gebildet oder separat von dieser vorgesehen sein. Das Außengewinde ist bevorzugt an einer zylindrischen Außenmantelfläche des Druckstücks vorgesehen. Der Durchmesser dieser Außenmantelfläche bildet insbesondere den oder den größten Außendurchmesser des Druckstücks. Das Innengewinde ist bevorzugt an einer zylindrischen Innenmantelfläche der Gehäuseausnehmung vorgesehen.

Das Druckstück ist insbesondere von außen zugänglich, sodass der Abstand des Druckstücks zum Kugelzapfen von außen verstellbar ist. Somit kann die Lage des Druckstücks während der Montage des Kugelschwenkmoduls justiert werden. Vorzugsweise weist das Druckstück einen von außen zugänglichen Angriffsbereich auf, an dem ein Werkzeug angreifen kann, mittels welchem das Druckstück insbesondere in die Gehäuseausnehmung einschraubbar ist. Der Angriffsbereich umfasst z.B. einen im Durchmesser reduzierten, runden Abschnitt des Druckstücks, einen Schlitz, zwei Löcher (wie z.B. für Steck-Montage Schlüssel für Schleifscheibenwechsel), einen Innenmehrkant, einen Außenmehrkant etc. Bevorzugt besteht das Druckstück aus einem metallischen Werkstoff.

Gemäß einer Weiterbildung der Erfindung umfasst das Druckstück einen Druckstift und eine Feder, mittels welcher der Druckstift gegen das in die Arretierungsausnehmung eingerückte Führungselement drückbar ist. Somit ist es möglich, das Führungselement aus der Arretierungsausnehmung auszurücken und dadurch den Kugelzapfen zu entriegeln, wenn der Kugelzapfen relativ zu dem Gehäuse aus der Betriebsstellung heraus geschwenkt werden soll. Alternativ ist es möglich, den Druckstift selbst als elastisches Element auszubilden, sodass auf eine Feder verzichtet werden kann. Die Arretierungsausnehmung ist insbesondere muldenförmig.

Der Sperrbolzen steht bevorzugt über eine oder wenigstens eine schräg zur Längsrichtung ausgerichtete Arbeitsfläche mit dem Führungselement in Kontakt, sodass eine Bewegung des Sperrbolzens in Längsrichtung in eine Bewegung des Führungselements in Führungsrichtung umsetzbar ist. Die Arbeitsfläche ist bevorzugt an dem Sperrbolzen vorgesehen. Insbesondere ist der Sperrbolzen mittels einer Feder gegen das Führungselement gespannt oder spannbar. Somit ist es möglich, dass der Sperrbolzen im Zusammenwirken mit dem Führungselement den Kugelzapfen automatisch verriegelt, wenn die Betriebsstellung erreicht ist. Ferner können Klappergeräusche vermieden werden. Das Führungselement kann ein- oder mehrteilig ausgebildet sein.

Der Kugelzapfen und das Gehäuse bilden jeweils ein Gelenkteil, wobei mit einem der Gelenkteile bevorzugt eine Kugelstange fest verbunden ist. Das andere der Gelenkteile ist bevorzugt an einem Zugfahrzeug befestigt, welches insbesondere ein Kraftfahrzeug ist. Die Kugelstange ist somit mittels des Kugelschwenkmoduls schwenkbar an dem Zugfahrzeug gelagert. An ihrem freien Ende weist die Kugelstange bevorzugt eine Kupplungskugel auf, an die insbesondere ein Kupplungsgegenstück eines Anhängerfahrzeugs ankuppelbar ist. Das Kupplungsgegenstück umfasst bevorzugt eine Kugelpfanne, in welcher die Kupplungskugel im angekuppelten Zustand gelagert ist. Gemäß einer ersten Alternative der Erfindung ist die Kugelstange fest mit dem Gehäuse und der Kugelzapfen fest mit dem Zugfahrzeug verbunden. Die Kugelstange kann dabei auch einstückig mit dem Gehäuse ausgebildet sein. Gemäß einer zweiten Alternative der Erfindung ist die Kugelstange fest mit dem Kugelzapfen und das Gehäuse fest mit dem Zugfahrzeug verbunden. Die Kugelstange kann dabei auch einstückig mit dem Kugelzapfen ausgebildet sein.

Gemäß einer Weiterbildung der Erfindung weist das Kugelschwenkmodul wenigstens ein in einer anderen Gehäuseausnehmung sitzendes und eine andere Arretierungsausnehmung aufweisendes anderes Druckstück und wenigstens einen in der Gelenkkugel vorgesehenen, in die Zapfenausnehmung einmündenden, zum Gehäuse hin offenen und in einer schräg- oder quer zur Längsrichtung ausgerichteten anderen Führungsrichtung verlaufenden anderen Führungskanal auf, in dem wenigsten ein in der anderen Führungsrichtung verschiebbar geführtes anderes Führungselement einliegt, welches in der Betriebsstellung des Kugelzapfens durch Verschieben des Sperrbolzens in die andere Arretierungsausnehmung einrückbar ist, wobei das andere Druckstück in die als Durchgangsloch ausgebildete andere Gehäuseausnehmung, insbesondere von außen, eingeschraubt ist.

Vorzugsweise umfasst das erfindungsgemäße Kugelschwenkmodul drei Druckstücke mit jeweils einer Arretierungsausnehmung, drei in der Gelenkkugel vorgesehene Führungskanäle und drei in diesen geführte Führungselemente, die mittels des Sperrbolzens in die Arretierungsausnehmungen der Druckstücke einrückbar sind, wobei jedes der Druckstücke in jeweils eine, im Gehäuse vorgesehene und als Durchgangsloch ausgebildete Gehäuseausnehmung, insbesondere von außen, eingeschraubt ist.

Der Kugelzapfen ist insbesondere gleitbeweglich in dem Gehäuse gelagert. Vorzugsweise ist der Kugelzapfen drehbar und/oder schwenkbar in dem Gehäuse gelagert. Gemäß einer Weiterbildung der Erfindung ist der Kugelzapfen mit seiner Gelenkkugel in einer in dem Gehäuse sitzenden Kugelschale aufgenommen, die bevorzugt aus Kunststoff besteht. Es ist aber auch eine Lagerung der Gelenkkugel ohne Kugelschale möglich. In diesem Fall bildet bevorzugt das Gehäuse selbst die Lagerung für die Gelenkkugel. Der Kugelzapfen umfasst vorzugsweise einen fest mit der Gelenkkugel verbundenen Zapfen, der aus dem Gehäuse herausragt. Bevorzugt besteht der Kugelzapfen aus Metall. Vorzugsweise besteht auch das Gehäuse aus einem metallischen Werkstoff.

Gemäß einer Ausgestaltung der Erfindung werden das oder die Druckstücke, die zum Verriegeln des Kugelzapfens in der Betriebsstellung dienen, nicht von innen eingepresst, sondern von außen eingeschraubt. Dies bietet mehrere Vorteile. Beispielsweise ist das Gehäuse kostengünstiger herstellbar. Auch sind die Druckstücke kostengünstiger herstellbar. Ferner können bei der positionierten Montage alle Längstoleranzen in der oder jeder Verriegelungseinheit (Druckstück, Führungselement) abgefangen werden. Somit ist es durch ein geeignetes Montageverfahren möglich, die für die Betriebssicherheit entscheidende Position des Sperrbolzens nicht nur hinsichtlich seiner gesamten Toleranzen fehlerfrei zu montieren, sondern auch noch so einzustellen, dass für den Betrieb des Kugelschwenkmoduls ein möglichst langer Nachstellweg bereitsteht. Dadurch ist auch bei beginnendem Verschleiß ein Optimum an Lebensdauer erreichbar.

Zur Montage wird der Sperrbolzen insbesondere in seiner Position bezüglich Höhe und Koaxialität zu den umgebenden Teilen (Zapfen und Gehäuse) fixiert, während die Druckstücke von außen zugeführt und verschraubt werden. Diese Positionierung des Sperrbolzens kann z.B. mittels einer Positionierungsvorrichtung erfolgen. Als Alternative zur Verwendung einer Positionierungsvorrichtung ist aber auch ein anderer geeigneter Verschraubungsprozess durchführbar. Das Gewindespiel des jeweiligen Druckstück kann durch die nach außen wirkende Verriegelungskraft, mit welcher das zugehörige Führungselement gegen das Druckstück gedrückt wird, in die richtige Richtung herausgenommen werden. Bevorzugt werden das oder die Druckstücke jeweils mit einer Gewindesicherung gegen Lösen gesichert, die vorzugsweise gleichzeitig eine Dichtfunktion erfüllt.

Das erfindungsgemäße Kugelschwenkmodul ist insbesondere derart einstellbar, das alle Toleranzen der vielen Einzelteile in der oder den Verriegelungseinheiten ausgeglichen werden können. Somit ist eine fehlerfreie Montage möglich. Insbesondere wird bei der Montage die Sperrbolzenstellung in der Betriebsstellung nicht mehr gemessen, sondern direkt eingestellt. Der Nachstellbereich ist optimiert. Die Gefahr von Scheinverriegelungen, in denen der Sperrbolzen die betriebssichere Stellung noch nicht erreicht hat, ist nicht mehr gegeben. Ferner sind viele Einzelteile, die zum Teil dreifach oder sechsfach (z.B. Klemmstück) je Kugelschwenkmodul erforderlich sind, kostengünstiger herstellbar.

Die Erfindung betrifft ferner ein Kraftfahrzeug mit einem Fahrzeugaufbau und einem Kugelschwenkmodul, mittels welchem eine Kugelstange schwenkbar an dem Fahrzeugaufbau gelagert ist. Das Kugelschwenkmodul ist insbesondere ein erfindungsgemäßes Kugelschwenkmodul und kann gemäß allen in diesem Zusammenhang beschriebenen Ausgestaltungen weitergebildet sein.

Die Erfindung wird nachfolgend anhand einer bevorzugten Ausführungsform unter Bezugnahme auf die Zeichnung beschrieben. In der Zeichnung zeigen:
- Fig. 1: einen teilweise dargestellten Längsschnitt durch ein Kugelschwenkmodul gemäß einer Ausführungsform der Erfindung,
- Fig. 2: eine vergrößerte Teilansicht des Längsschnitts nach Fig. 1,
- Fig. 3: eine schematische Seitenansicht eines Kraftfahrzeugs mit einem erfindungsgemäßen Kugelschwenkmodul und
- Fig. 4: einen teilweise dargestellten Längsschnitt durch ein anderes, nicht erfindungsgemäßes Kugelschwenkmodul mit eingepresstem Druckstück.

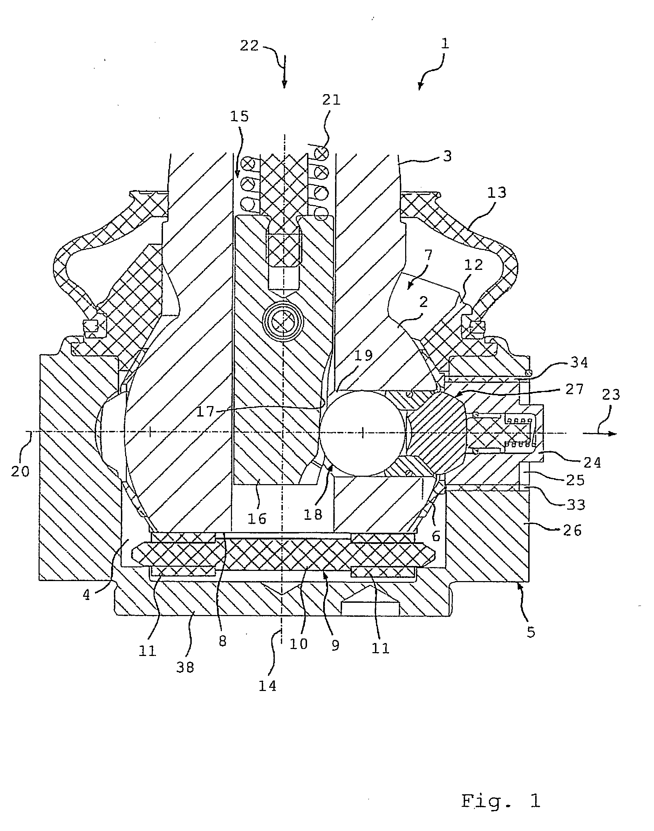

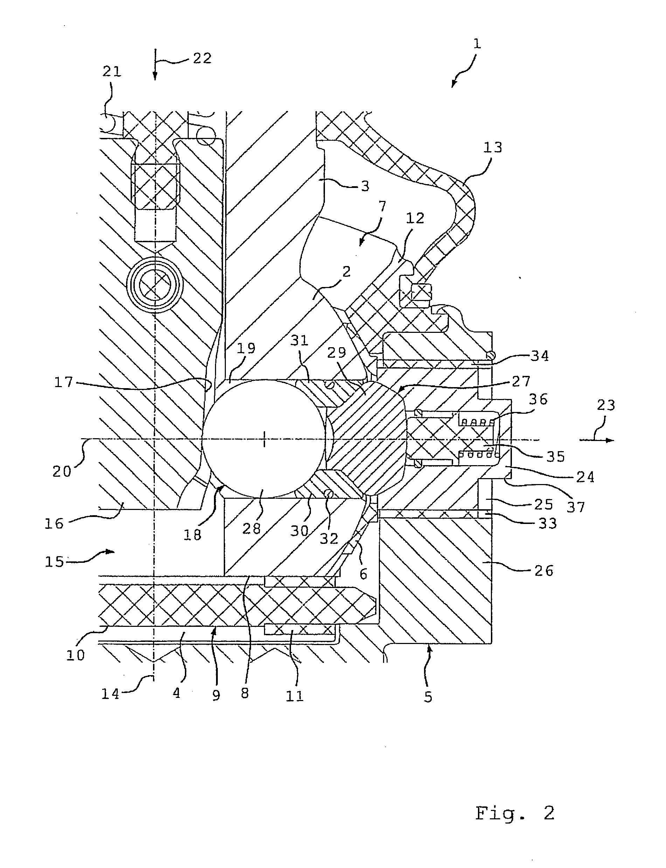

Aus den Fig. 1 und 2 ist ein Kugelschwenkmodul 1 gemäß einer Ausführungsform der Erfindung im Längsschnitt ersichtlich, wobei ein eine Gelenkkugel 2 umfassender Kugelzapfen 3 mit seiner Gelenkkugel 2 in einem Innenraum 4 eines Gehäuses 5 sitzt. Die Gelenkkugel 2 ist unter Zwischenschaltung einer in dem Innenraum 4 angeordneten Kugelschale 6 gleitbeweglich in dem Gehäuse 5 gelagert, wobei sich der Kugelzapfen 3 durch eine Öffnung 7 aus dem Gehäuse 5 heraus erstreckt. An ihrem der Öffnung 7 abgewandten Ende weist die Gelenkkugel 2 eine Steuerfläche 8 auf, die an einem in dem Gehäuse 5 gelagerten Steuerelement 9 anliegt und mit diesem in Linienberührung steht. Das im Bereich des Gehäusebodens 38 angeordnete Steuerelement 9 umfasst einen in dem Gehäuse 5 gelagerten Bolzen 10, auf dem zylindrische Hülsen 11 sitzen, die mit der Steuerfläche 8 in Kontakt stehen. Die Öffnung 7 wird von einem Verschlussring 12 begrenzt, der an dem Gehäuse 5 befestigt ist und diesem zugerechnet wird, sodass die Öffnung 7 eine Gehäuseöffnung bildet. An dem Verschlussring 12 ist ein Dichtungsbalg 13 festgelegt, der sich bis zu dem Kugelzapfen 3 erstreckt und die Gehäuseöffnung 7 abdeckt.

In dem Kugelzapfen 3 ist eine sich in einer Längsrichtung 14 erstreckende Zapfenausnehmung 15 vorgesehen, in der ein Sperrbolzen 16 einliegt und in Längsrichtung 14 verschiebbar geführt ist. Der Sperrbolzen 16 umfasst eine schräg zur Längsrichtung 14 verlaufende Arbeitsfläche 17 und liegt mit dieser an einem Führungselement 18 an, welches in einem Führungskanal 19 sitzt und in diesem in einer Führungsrichtung 20 verschiebbar geführt ist. Der Führungskanal 19 ist in der Gelenkkugel 2 vorgesehen und erstreckt sich in Führungsrichtung 20, die quer zur Längsrichtung 14 verläuft. Der Sperrbolzen 16 ist mittels einer Feder 21 in Richtung des Pfeils 22 gegen das Führungselement 18 gespannt. Somit wird das Führungselement 18 in Richtung des in Führungsrichtung 20 verlaufenden Pfeils 23 gegen ein Druckstück 24 gedrückt, welches in einer Gehäuseausnehmung 25 sitzt. Die Gehäuseausnehmung 25 erstreckt sich durch eine den Innenraum 4 begrenzende Wandung 26 des Gehäuses 5 hindurch und ist somit als Durchgangsloch ausgebildet. Auf der dem Kugelzapfen 3 zugewandten Stirnseite des Druckstücks 24 ist in diesem eine Arretierungsausnehmung 27 vorgesehen, in welche das Führungselement 18 eingreift. Die Arretierungsausnehmung 27 ist muldenförmig ausgebildet, sodass gemäß der Fig. 1 und 2 der Kugelzapfen 3 an dem Gehäuse 5 verriegelt ist.

Das Führungselement 18 ist mehrteilig ausgebildet und umfasst eine an dem Sperrbolzen anliegende Kugel 28, ein in die Arretierungsausnehmung 27 eingreifendes Verriegelungsstück 29 und zwischen der Kugel 28 und dem Verriegelungsstück 29 angeordnete Klemmstücke 30 und 31, die mittels eines Halterings 32 zusammengehalten werden, der vorzugsweise aufweitbar und insbesondere als einseitig offener O-Ring ausgebildet ist. Die Klemmstücke 30 und 31 bilden bevorzugt jeweils einen Teilring oder Halbring.

Die Gehäuseausnehmung 25 ist zylindrisch ausgebildet und weist an ihrer Innenmantelfläche ein Innengewinde 33 auf. Ferner weist das Druckstück 24 an seiner zylindrischen Außenmantelfläche ein Außengewinde 34 auf, welches mit dem Innengewinde 33 im Eingriff steht. Das Druckstück 24 ist über einen im Durchmesser reduzierten Angriffsbereich 37 von außen zugänglich, an dem ein Montagewerkzeug zum Montieren des Druckstücks 24 angreifen kann, welches in Gegenrichtung des Pfeils 23 von außen in die Gehäuseausnehmung 25 eingeschraubt ist. In dem Druckstück 24 ist ein Druckstift 35 in Führungsrichtung 20 verschiebbar gelagert und mittels einer Feder 36 gegen das Führungselement 18 gespannt.

Zum Entriegeln wird der Sperrbolzen 16 gegen die Kraft der Feder 21 in Gegenrichtung des Pfeil 22 angehoben, woraufhin der Druckstift 35 das Führungselement 18 aus der Arretierungsausnehmung 27 ausrückt. Danach kann der Kugelzapfen 3 relativ zu dem Gehäuse 5 bewegt werden.

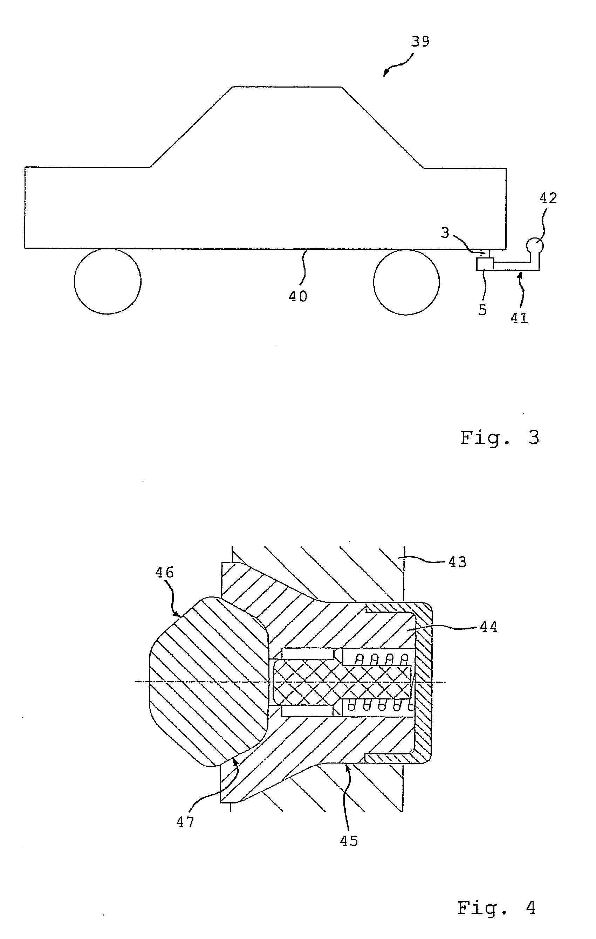

Aus Fig. 3 ist eine schematische Seitenansicht eines Kraftfahrzeugs 39 ersichtlich, an dessen Fahrzeugaufbau 40 das Kugelschwenkmodul 1 mit seinem Kugelzapfen 3 montiert ist. Mit dem Gehäuse 5 ist eine Kugelstange 41 fest verbunden, die an ihrem freien Ende eine Kupplungskugel 42 aufweist. Das Kugelschwenkmodul 1 bildet somit zusammen mit der Kugelstange 41 eine Anhängevorrichtung für das Kraftfahrzeug 39.

Aus Fig. 4 ist ein teilweise dargestellter Längsschnitt durch ein anderes, nicht erfindungsgemäßes Kugelschwenkmodul ersichtlich, wobei ein Druckstück 44 in eine Gehäuseausnehmung 45 eingepresst ist. Ferner ist das Verriegelungsstück 46 eines Führungselements dargestellt, welches in eine Arretierungsausnehmung 47 des Druckstücks 44 eingreift. Diese Art der Druckstückmontage wirft Probleme bei der Positionierung des Druckstücks 44 auf. Auch ist die Ausbildung der teilweise konusförmigen Gehäuseausnehmung 45 aufwändig. Ferner ist eine Nachjustierung des Druckstücks 44 nach dem Einpressen nicht mehr möglich. Das erfindungsgemäße Schwenkmodul 1 hebt sich somit vorteilhaft von der aus Fig. 4 ersichtlichen Lösung ab.

### Bezugszeichenliste

- 1: Kugelschwenkmodul
- 2: Gelenkkugel
- 3: Kugelzapfen
- 4: Gehäuseinnenraum
- 5: Gehäuse
- 6: Kugelschale
- 7: Öffnung des Verschlussrings / Gehäuseöffnung
- 8: Steuerfläche
- 9: Steuerelement
- 10: Bolzen
- 11: Hülse
- 12: Verschlussring
- 13: Dichtungsbalg
- 14: Längsrichtung
- 15: Zapfenausnehmung
- 16: Sperrbolzen
- 17: Arbeitsfläche an Sperrbolzen
- 18: Führungselement
- 19: Führungskanal
- 20: Führungsrichtung
- 21: Feder
- 22: Pfeil
- 23: Pfeil
- 24: Druckstück
- 25: Gehäuseausnehmung
- 26: Gehäusewandung
- 27: Arretierungsausnehmung
- 28: Kugel des Führungselements
- 29: Verriegelungsstück des Führungselements
- 30: Klemmstück des Führungselements
- 31: Klemmstück des Führungselements
- 32: Haltering für Klemmstücke
- 33: Innengewinde der Gehäuseausnehmung
- 34: Außengewinde des Druckstücks
- 35: Druckstift des Druckstücks
- 36: Feder des Druckstücks
- 37: Angriffsbereich des Druckstücks
- 38: Gehäuseboden
- 39: Kraftfahrzeug
- 40: Fahrzeugaufbau
- 41: Kugelstange
- 42: Kupplungskugel
- 43: Gehäusewandung
- 44: Druckstück
- 45: Gehäuseausnehmung
- 46: Verriegelungsstück
- 47: Arretierungsausnehmung

## Patentansprüche

1. Kugelschwenkmodul mit
einem Gehäuse (5),
einem eine Gelenkkugel (2) umfassenden, mittels dieser bewegbar in dem Gehäuse (5) gelagerten und sich aus diesem heraus erstreckenden Kugelzapfen (3), in dem eine sich in einer Längsrichtung (14) erstreckende Zapfenausnehmung (15) vorgesehen ist,
einem in der Zapfenausnehmung (15) einliegenden und in Längsrichtung (14) verschiebbar geführten Sperrbolzen (16),
wenigstens einem in einer Gehäuseausnehmung (25) sitzenden und eine Arretierungsausnehmung (27) aufweisenden Druckstück (24),
wenigstens einem in der Gelenkkugel (2) vorgesehenen, in die Zapfenausnehmung (15) einmündenden, zum Gehäuse (5) hin offenen und in einer schräg oder quer zur Längsrichtung (14) ausgerichteten Führungsrichtung (20) verlaufenden Führungskanal (19), in dem wenigstens ein in der Führungsrichtung (20) verschiebbar geführtes Führungselement (18) einliegt, welches in einer Betriebsstellung des Kugelzapfens (3) durch Verschieben des Sperrbolzens (16) in die Arretierungsausnehmung (27) einrückbar ist,
**dadurch gekennzeichnet, dass**
das Druckstück (24) in die als Durchgangsloch ausgebildete Gehäuseausnehmung (25) eingeschraubt ist.

2. Kugelschwenkmodul nach Anspruch 1,
**dadurch gekennzeichnet, dass**
sich das Durchgangsloch durch eine Wandung (26) des Gehäuses (5) hindurch erstreckt.

3. Kugelschwenkmodul nach Anspruch 1 oder 2,
**dadurch gekennzeichnet, dass**
die Gehäuseausnehmung (25) durchgängig zylindrisch ausgebildet ist.

4. Kugelschwenkmodul nach einem der vorangehenden Ansprüche,
**dadurch gekennzeichnet, dass**
das Druckstück (24) eine zylindrische Außenmantelfläche mit einem Außengewinde (34) aufweist, welches mit einem an einer zylindrischen Innenmantelfläche der Gehäuseausnehmung (25) vorgesehenen Innengewinde (33) im Eingriff steht.

5. Kugelschwenkmodul nach einem der vorangehenden Ansprüche,
**dadurch gekennzeichnet, dass**
das Druckstück (24) von außen zugänglich ist, sodass der Abstand des Druckstücks (24) zum Kugelzapfen (3) von außen verstellbar ist.

6. Kugelschwenkmodul nach einem der vorangehenden Ansprüche,
**dadurch gekennzeichnet, dass**
das Druckstück (24) einen Druckstift (35) und eine Feder (36) umfasst, mittels welcher der Druckstift (35) gegen das in die Arretierungsausnehmung (27) eingerückte Führungselement (18) drückbar ist.

7. Kugelschwenkmodul nach einem der vorangehenden Ansprüche,
**dadurch gekennzeichnet, dass**
der Sperrbolzen (16) über eine schräg zur Längsrichtung (14) ausgerichtete Arbeitsfläche (17) mit dem Führungselement (18) in Kontakt steht, sodass eine Bewegung des Sperrbolzens (16) in Längsrichtung (14) in eine Bewegung des Führungselements (18) in Führungsrichtung (20) umsetzbar ist.

8. Kugelschwenkmodul nach Anspruch 7,
**dadurch gekennzeichnet, dass**
der Sperrbolzen (16) mittels einer Feder (21) gegen das Führungselement (18) spannbar ist.

9. Kugelschwenkmodul nach einem der vorangehenden Ansprüche,
**dadurch gekennzeichnet, dass**
das Führungselement (18) mehrteilig ausgebildet ist.

## Claims

1. Ball pivoting module having
a housing (5),
a ball pivot (3) which comprises a joint ball (2), is mounted movably in the housing (5) by means of the said ball pivot (3), and extends out of the said housing (5), in which ball pivot (3) a pivot recess (15) which extends in a longitudinal direction (14) is provided,
a locking bolt (16) which lies in the pivot recess (15) and is guided displaceably in the longitudinal direction (14),
at least one pressure piece (24) which is seated in a housing recess (25) and has an arresting recess (27),
at least one guide channel (19) which is provided in the joint ball (2), opens into the pivot recess (15), is open towards the housing (5) and runs in a guide direction (20) which is oriented obliquely or transversely with respect to the longitudinal direction (14), in which guide channel (19) at least one guide element (18) lies which is guided displaceably in the guide direction (20) and can be inserted into the arresting recess (27) by displacement of the locking bolt (16) in an operating position of the ball pivot (3),
**characterized in that**
the pressure piece (24) is screwed into the housing recess (25) which is configured as a through hole.

2. Ball pivoting module according to Claim 1, **characterized in that** the through hole extends through a wall (26) of the housing (5).

3. Ball pivoting module according to Claim 1 or 2, **characterized in that** the housing recess (25) is of continuously cylindrical configuration.

4. Ball pivoting module according to one of the preceding claims, **characterized in that** the pressure piece (24) has a cylindrical outer circumferential face with an external thread (34) which is in engagement with an internal thread (33) which is provided on a cylindrical inner circumferential face of the housing recess (25).

5. Ball pivoting module according to one of the preceding claims, **characterized in that** the pressure piece (24) is accessible from the outside, with the result that the spacing of the pressure piece (24) from the ball pivot (3) can be adjusted from the outside.

6. Ball pivoting module according to one of the preceding claims, **characterized in that** the pressure piece (24) comprises a pressure pin (35) and a spring (36), by means of which the pressure pin (35) can be pressed against the guide element (18) which is inserted into the arresting recess (27).

7. Ball pivoting module according to one of the preceding claims, **characterized in that** the locking bolt (16) is in contact with the guide element (18) via a working face (17) which is oriented obliquely with respect to the longitudinal direction (14), with the result that a movement of the locking bolt (16) in the longitudinal direction (14) can be converted into a movement of the guide element (18) in the guide direction (20).

8. Ball pivoting module according to Claim 7, **characterized in that** the locking bolt (16) can be stressed against the guide element (18) by means of a spring (21).

9. Ball pivoting module according to one of the preceding claims, **characterized in that** the guide element (18) is of multiple-piece configuration.

## Revendications

1. Module de pivot sphérique comprenant un boîtier (5),
un tourillon sphérique (3) comportant une rotule d'articulation (2), monté de manière déplaçable au moyen de celle-ci dans le boîtier (5) et s'étendant hors de celui-ci, dans lequel tourillon sphérique est prévu un évidement de tourillon (15) s'étendant dans une direction longitudinale (14), un boulon de blocage (16) logé dans l'évidement de tourillon (15) et guidé de manière mobile dans la direction longitudinale (14),
au moins une pièce de pression (24) reposant dans un évidement de boîtier (25) et comprenant un évidement de verrouillage (27),
au moins un canal de guidage (19) prévu dans la rotule d'articulation (2), débouchant dans l'évidement de tourillon (15), ouvert en direction du boîtier (5) et s'étendant dans une direction de guidage (20) orientée de manière oblique ou transversale par rapport à la direction longitudinale (14), dans lequel canal de guidage est logé au moins un élément de guidage (18) guidé de manière mobile dans la direction de guidage (20), lequel élément de guidage peut être engagé dans l'évidement de verrouillage (27) par déplacement du boulon de blocage (16) dans une position de fonctionnement du tourillon sphérique (3),
**caractérisé en ce que**
la pièce de pression (24) est vissée dans l'évidement de boîtier (25) réalisé sous forme de trou traversant.

2. Module de pivot sphérique selon la revendication 1,
**caractérisé en ce que**
le trou traversant s'étend à travers une paroi (26) du boîtier (5).

3. Module de pivot sphérique selon la revendication 1 ou 2,
**caractérisé en ce que** l'évidement de boîtier (25) est réalisé de manière cylindrique traversante.

4. Module de pivot sphérique selon l'une quelconque des revendications précédentes,
**caractérisé en ce que**
la pièce de pression (24) comprend une surface d'enveloppe extérieure cylindrique pourvue d'un filetage extérieur (34), lequel est en prise avec un filetage intérieur (33) prévu sur une surface d'enveloppe intérieure cylindrique de l'évidement de boîtier (25).

5. Module de pivot sphérique selon l'une quelconque des revendications précédentes,
**caractérisé en ce que**
la pièce de pression (24) est accessible depuis l'extérieur, de telle sorte que la distance de la pièce de pression (24) au tourillon sphérique (3) puisse être ajustée depuis l'extérieur.

6. Module de pivot sphérique selon l'une quelconque des revendications précédentes,
**caractérisé en ce que**
la pièce de pression (24) comporte une goupille de pression (35) et un ressort (36) au moyen duquel la goupille de pression (35) peut être pressée contre l'élément de guidage (18) engagé dans l'évidement de verrouillage (27).

7. Module de pivot sphérique selon l'une quelconque des revendications précédentes,
**caractérisé en ce que**
le boulon de blocage (16) est en contact avec l'élément de guidage (18) par le biais d'une surface de travail (17) orientée de manière oblique par rapport à la direction longitudinale (14), de telle sorte qu'un déplacement du boulon de blocage (16) dans la direction longitudinale (14) puisse être transformé en un déplacement de l'élément de guidage (18) dans la direction de guidage (20).

8. Module de pivot sphérique selon la revendication 7,
**caractérisé en ce que**
le boulon de blocage (16) peut être serré contre l'élément de guidage (18) au moyen d'un ressort (21).

9. Module de pivot sphérique selon l'une quelconque des revendications précédentes,
**caractérisé en ce que**
l'élément de guidage (18) est réalisé en plusieurs parties.
